(19) Europäisches Patentamt
European Patent Office
Office européen des brevets

(11) **EP 1 205 728 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(51) Int Cl.:
*G01B 11/02* (2006.01)     *G01D 5/245* (2006.01)
*G01D 5/34* (2006.01)     *G06F 1/28* (2006.01)

(21) Anmeldenummer: **01125831.6**

(22) Anmeldetag: **30.10.2001**

(54) **Verfahren zur Inbetriebnahme eines Positionsmessgerätes**

Method for putting a position measuring device into operation

Procédé de mise en service d'un dispositif de mesure de position

(84) Benannte Vertragsstaaten:
**AT BE CH CY DE DK ES FI FR GB GR IE IT LI LU MC NL PT SE TR**

(30) Priorität: **11.11.2000 DE 10055996**

(43) Veröffentlichungstag der Anmeldung:
**15.05.2002 Patentblatt 2002/20**

(73) Patentinhaber: **Dr. Johannes Heidenhain GmbH
83292 Traunreut (DE)**

(72) Erfinder: **Strasser, Erich
83308 Trostberg (DE)**

(56) Entgegenhaltungen:
**DE-A- 4 011 411**

• **PATENT ABSTRACTS OF JAPAN vol. 1997, no. 08, 29. August 1997 (1997-08-29) & JP 09 091045 A (NEC CORP), 4. April 1997 (1997-04-04)**

**Beschreibung**

Die Erfindung betrifft ein Positionsmeßgerät gemäß dem Oberbegriff des Anspruches 1. Solche Positionsmeßgeräte werden beispielsweise in Werkzeugmaschinen eingesetzt, um die Lage eines Werkstückes absolut oder relativ zu einem Werkzeug festzustellen. Weiter betrifft die Erfindung ein Verfahren zur Inbetriebnahme eines Positionsmeßgerätes gemäß dem Oberbegriff des Anspruches 3.

Ein Positionsmeßgerät der genannten Art ist etwa in der DE4342377A1 der Anmelderin beschrieben. Eine Positionsmeßeinrichtung ist vollständig in eine Abtasteinheit integriert, es werden die Signale eines Detektors, der einen Maßstab abtastet, digitalisiert und daraus Positionsdaten berechnet. Zwischen der Positionsmeßeinrichtung und einer Verarbeitungseinheit werden Daten über eine serielle Schnittstelle übertragen, die zum einen Positionsdaten aus der eigentlichen Positionsmessung enthalten, zum anderen auch weitere Informationen über die Positionsmeßeinrichtung selbst, mit dem die Verarbeitungseinheit an die Positionsmeßeinrichtung angepaßt werden kann.

Ein Problem für dieses und ähnliche Positionsmeßgeräte ist die Gewährleistung einer zum sicheren Betrieb der Abtasteinheit des Positionsmeßgerätes nötigen Versorgungsspannung. Ist diese nicht hoch genug, etwa weil vom Anwender ein Versorgungskabel mit zu geringem Querschnitt und damit zu hohem Leitungswiderstand verwendet wurde, kann es zu Fehlfunktionen der Abtasteinheit kommen, die zu einer falschen Positionsbestimmung führen. Steuerungsbefehle, die aufgrund solcher falschen Positionsbestimmungen erteilt werden, können z.B. in Werkzeugmaschinen zur Beschädigung von Werkzeug oder Werkstück führen. Es kann die Versorgungsspannung aber auch so niedrig sein, daß das Positionsmeßgerät gar nicht initialisiert werden kann.

In der DE4422056A1 ist ein Verfahren zum Übertragen von Mehrfachseriensignalen beschrieben, die für die Lagekontrolle und Regelung eines Motors eingesetzt werden. Dabei ist die Übertragung eines Kontrollbits für die Versorgungsspannung offenbart, das von einem Spannungsabfall - Detektor gespeist wird. Nachteilig ist jedoch, daß im Falte einer zu niedrigen Versorgungsspannung nach dem Einschalten auch die Schnittstelle selbst nicht arbeitet, die dieses Kontrollbit übertragen soll. Eine das Kontrollbit empfangende Auswerteeinheit bekommt den Status "Versorgungsspannung unterschritten" also gar nicht erst mitgeteilt. Der Anwender bekommt keinen Hinweis für die Fehlersuche in seinem Positionsmeßgerät.

In der DE4011411A1 ist ein Positionsmeßgerät beschrieben, in dessen Abtastkopf eine Hauptstromversorgung überwacht wird. Unterschreitet diese Hauptstromversorgung einen bestimmten Spannungspegel, so wird auf eine Notstromversorgung umgeschaltet, und es werden nicht mehr alle Komponenten des Abtastkopfes betrieben. Erst wenn die Hauptstromversorgung wieder hergestellt ist, werden auch wieder alle Komponenten des Abtastkopfes in Betrieb genommen. Für diese Lösung sind allerdings zwei getrennte Stromversorgungen nötig.

Um eine Versorgungsspannung beim Einschalten von beliebigen Verbrauchern zu überwachen und deren Unterversorgung zu vermeiden, ist es aus der JP9091045A2 bekannt, aus dem Spannungsabfall beim Zuschalten eines Verbrauchers mit bekannter Stromaufnahme den Innenwiderstand der Spannungsquelle zu bestimmen, und aufgrund des bekannten Strombedarfs weiterer Verbraucher diese nur zu aktivieren, wenn die Versorgungsspannung einen Grenzwert dabei nicht unterschreiten würde.

Aufgabe der Erfindung ist es, ein Verfahren zur Inbetriebnahme der Abtasteinheit eines Positionsmeßgerätes anzugeben, das schon beim Einschalten eine Überprüfung der zum sicheren Betrieb der Abtasteinheit notwendigen Spannungsversorgung erlaubt.

Diese Aufgabe wird gelöst durch ein Verfahren mit den Maßnahmen des Anspruches 1. Vorteilhafte Details des Verfahrens ergeben sich aus den Maßnahmen, die in dem von Anspruch 1 abhängigen Anspruch aufgeführt sind.

Nach dem Einschalten des Positionsmeßgerätes wird in der Abtasteinheit zunächst nur die Schnittstelle zwischen Abtasteinheit und Auswerteeinheit, sowie eine Spannungsüberwachungseinheit mit Spannung versorgt. Die Spannungsüberwachungseinheit stellt dann fest, welchen Innenwiderstand die Spannungsversorgung der Abtasteinheit aufweist und berechnet daraus die Versorgungsspannung, die nach dem Einschalten aller Verbraucher in der Abtasteinheit zur Verfügung stehen würde. Nur wenn dieser Wert für einen sicheren Betrieb der Abtasteinheit ausreicht, wird diese vollständig aktiviert, andernfalls wird eine Fehlermeldung über die Schnittstelle ausgegeben. Der Anwender eines solchen Systems hat den großen Vorteil, daß er bei einer Unterversorgung der Abtasteinheit nicht mit schwer zu erkennenden Fehlmessungen konfrontiert wird und spart Zeit bei der Fehlersuche, falls etwa nur ein falsches Kabel zur Spannungsversorgung verwendet wurde, oder schlechte Kontaktwiderstände an den Kabelverbindungen auftreten.

Weitere Vorteile sowie Einzelheiten der vorliegenden Erfindung ergeben sich aus der nachfolgenden Beschreibung einer bevorzugten Ausführungsform.

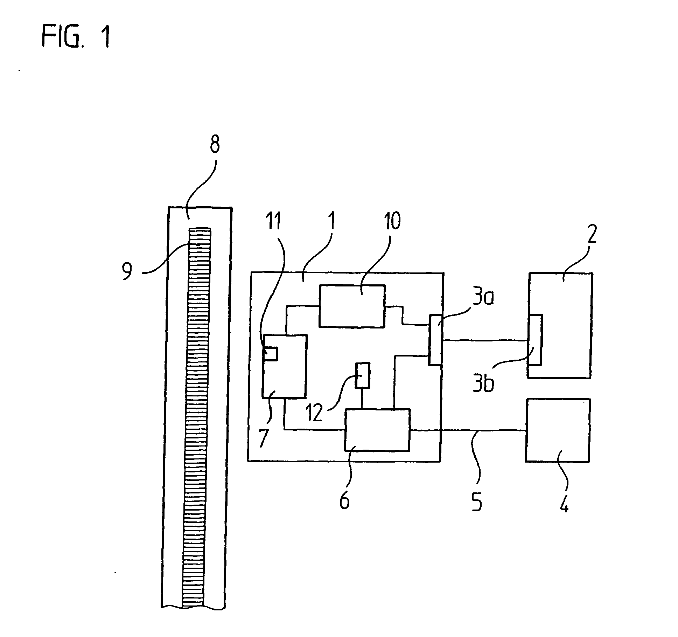

Dabei zeigt Figur 1 ein Positionsmeßgerät, bestehend aus einer Abtasteinheit 1 und einem Teilungsträger 8 mit einer Teilung 9. In der Abtasteinheit 1 befindet sich ein Lesekopf 7, der die Teilung 9 des Teilungsträgers 8 abliest. In einer Positionsberechnungseinheit 10 wird aus der Ablesung des Lesekopfes 7 eine Position berechnet, die dann über serielle Schnittstellen 3a und 3b an eine Auswerteeinheit 2 übertragen wird. Der Teilungsträger 8 und die Abtasteinheit 1 sind gegeneinander beweglich, der Teilungsträger 8 kann etwa an einem beweglichen Maschinenteil einer nicht gezeichneten Werkzeugmaschine befestigt sein, die Abtasteinheit 1 an deren Maschinenbett.

Die Abtasteinheit 1 wird von einer Spannungsversorgung 4 über eine Versorgungsleitung 5 mit elektrischer Spannung versorgt. Die in der Abtasteinheit 1 zur Verfügung stehende Spannung hängt dabei von der Stromaufnahme der einzelnen Verbraucher ab, sowie vom Innenwiderstand der Spannungsversorgung 4 selbst und dem Leitungswiderstand der Versorgungsleitung 5. Zu den Verbrauchern in der Abtasteinheit 1 zählen der Lesekopf 7 mit einer Lichtquelle 11, die Positionsberechnungseinheit 10, die serielle Schnittstelle 3a, sowie eine Spannungsüberwachungseinheit 6.

Im Laufe der Initialisierung des beschriebenen Positionsmeßgerätes werden nun nach dem Einschalten der Spannungsversorgung 4 in der Abtasteinheit 1 zunächst nur die serielle Schnittstelle 3a und die Spannungsüberwachungseinheit 6 aktiviert. Die Stromaufnahme ist dann deutlich geringer als bei einer vollständigen Aktivierung aller Verbraucher der Abtasteinheit 1. Es erübrigt sich z.B. in einem optischen Positionsmeßgerät während der Initialisierung die Versorgung der Lichtquelle 11 im Lesekopf 7, die im Betrieb für einen hohen Energieverbrauch verantwortlich ist. In einem auf magnetischer Abtastung beruhenden Positionsmeßgerät können Hall-Sensoren zunächst abgeschaltet bleiben. Auf diese Weise ist sichergestellt, daß auch bei einer schlechten Spannungsversorgung (z.B. aufgrund eines zu hohen Spannungsabfalles an der Versorgungsleitung 5) die Spannungsüberwachungseinheit 6 und die serielle Schnittstelle 3a betrieben werden können.

Die Spannungsüberwachungseinheit 6 mißt nun als erstes die in der Abtasteinheit 1 zur Verfügung stehende Versorgungsspannung U1. Anschließend wird eine zusätzliche definierte Last 12 zugeschaltet und erneut die Versorgungsspannung U2 gemessen. Der effektive Innenwiderstand Reff der Spannungsversorgung 4 kann dann als Quotient aus der Differenz der beiden gemessenen Spannungen und der bekannten Stromaufnahme ΔI der definierten Last 12 berechnet werden, wobei der Leitungswiderstand der Versorgungsleitung 5 bereits berücksichtigt ist. Es gilt also:

$$Reff = (U1 - U2) / \Delta I$$

Die Aktivierung der Schnittstelle 3a kann selbstverständlich auch erst nach der Überprüfung der Spannungsversorgung 4 mittels der Spannungsüberwachungseinheit 6 und der kleinen Last 12 erfolgen, da sie frühestens zur Übermittlung einer Fehlermeldung benötigt wird. Zudem ist es auch denkbar, die Schnittstelle 3a als definierte Last 12 zu verwenden.

Da auch die Stromaufnahme aller weiteren Verbraucher der Abtasteinheit bekannt ist, und damit die Stromaufnahme Iges der gesamten Abtasteinheit im Meßbetrieb, kann jetzt berechnet werden, welche Versorgungsspannung Ueff nach Aktivierung aller Verbraucher zur Verfügung stehen wird:

$$Ueff = Reff * Iges$$

Liegt die vorausberechnete Versorgungsspannung Ueff über einer zum sicheren Betrieb der Abtasteinheit 1 nötigen Grenzspannung Ug, kann die Initialisierung des Positionsmeßgerätes abgeschlossen werden, indem alle Verbraucher mit Spannung versorgt werden, und somit der Meßbetrieb aufgenommen werden. Liegt die vorausberechnete Versorgungsspannung unter der Grenzspannung Ug, kann von der Spannungsüberwachungseinheit 6 über die zu diesem Zeitpunkt bereits funktionsfähige serielle Schnittstelle 3a eine entsprechende Meldung an die Auswerteeinheit 2 übertragen werden.

Vorteilhafterweise wird die Grenzspannung Ug so gewählt, daß Einflüsse, die zu einem Absinken der Versorgungsspannung während des Meßbetriebes führen können, bereits berücksichtigt sind. So muß etwa die Stromaufnahme einer als Lichtquelle 11 dienenden Leuchtdiode erhöht werden, wenn durch Erwärmung von Empfängerdioden diese weniger empfindlich werden.

Auch die Alterung der Leuchtdiode oder das Beschlagen oder Verschmutzen des Teilungsträgers 8 während der Lebensdauer des Positionsmeßgerätes muß mit einer höheren Stromaufnahme der Lichtquelle 11 kompensiert werden, um die Signalhöhe am Ausgang des Lesekopfes 7 konstant zu halten. Eine solchermaßen erhöhte Stromaufnahme senkt die zur Verfügung stehende Versorgungsspannung ab. Die Grenzspannung Ug kann dann von vornherein so gewählt werden, daß die erhöhte Stromaufnahme einer gealterten LED schon berücksichtigt ist, oder vorteilhafter während der Lebensdauer des Meßgerätes entsprechend angehoben werden. Die Toleranz der Spannungsversorgung 4 selbst sollte ebenfalls berücksichtigt werden, sie beträgt typischerweise ca. +/- 5% vom Sollwert.

Die beschriebene Form der Spannungsüberwachung kann ohne eigens zu diesem Zweck verwendete Bauteile auskommen, da alle benötigten Komponenten in einer Abtasteinheit 1 eines Positionsmeßgerätes der beschriebenen Art bereits vorhanden sind und zum Zweck der Spannungsüberwachung während der Initialisierung des Positionsmeßgerätes nur anders angesteuert werden müssen. Dies betrifft beispielsweise die A/D-Wandler zur Messung der Versorgungsspannung, die im eigentlichen Meßbetrieb zur Digitalisierung der Signale des Lesekopfes 7 dienen. Die Funktion der Spannungsüberwachungseinheit 6 kann dabei von einem Prozessor oder einem ASIC übernommen werden, der im Meßbetrieb ebenfalls andere Funktionen erfüllt.

Die Erfindung eignet sich für lineare und rotatorische Positionsmeßgeräte mit verschiedensten Abtastprinzipien, etwa optische, magnetische, induktive oder kapazitive Systeme.

**Patentansprüche**

1. Verfahren zur Inbetriebnahme eines Positionsmeßgerätes mit einer Abtasteinheit (1), bei dem nach dem Einschalten des Positionsmeßgerätes in der Abtasteinheit (1) zunächst eine Spannungsüberwachungseinheit (6) von einer Spannungsversorgung (4) mit Spannung versorgt wird, die Spannungsüberwachungseinheit (6) sodann eine Überprüfung der Spannungsversorgung (4) durchführt, und darauf weitere Verbraucher der Abtasteinheit (1) aktiviert werden, sofern bei der Überprüfung eine hierfür ausreichende Spannungsversorgung (4) festgestellt wurde, **dadurch gekennzeichnet, daß** die Überprüfung der Spannungsversorgung (4) erfolgt, indem der Innenwiderstand (Reff) der Spannungsversorgung (4) berechnet und aus dem Innenwiderstand Reff der Spannungsversorgung (4) und dem bekannten Strombedarf Iges der Abtasteinheit (1) im Meßbetrieb ein Versorgungsspannungswert Ueff berechnet wird, der nach Aktivierung der weiteren Verbraucher der Abtasteinheit (1) zur Verfügung stehen würde, wobei die Spannungsüberwachungseinheit (6) eine Fehlermeldung über eine Schnittstelle (3a) der Abtasteinheit (1) ausgibt, falls der berechnete Versorgungsspannungswert Ueff unterhalb einer zum sicheren Betrieb der Abtasteinheit (1) notwendigen Grenzspannung Ug liegt.

2. Verfahren nach Anspruch 1, **dadurch gekennzeichnet, daß** bei der Wahl der Grenzspannung Ug Effekte berücksichtigt werden, die die Versorgungsspannung während des Meßbetriebes oder während der Lebensdauer des Positionsmeßgerätes absinken lassen.

**Claims**

1. A method for starting a position measuring device comprising a scanner unit (1), in the case of which voltage is initially supplied to a voltage monitoring unit (6) by a voltage supply (4) after activating the position measuring device in the scanner unit (1), the voltage monitoring unit (6) then performs an inspection of the voltage supply (4) and further loads of the scanner unit (1) being activated thereupon, provided that a voltage supply (4), which is sufficient for this purpose, has been determined in response to the inspection, **characterized in that** the inspection of the voltage supply (4) takes place **in that** the internal resistance (Reff) of the voltage supply (4) is computed and **in that** a supply voltage value Ueff, which would be available after activation of the further loads of the scanner unit (1), is computed in the measuring mode from the internal resistance Reff of the voltage supply (4) and the known current demand Iges of the scanner unit (1), wherein the voltage monitoring unit (6) puts out an error message via an interface (3a) of the scanner unit (1) in the event that the computed supply voltage value Ueff lies below a critical voltage Ug, which is necessary for reliably operating the scanner unit (1).

2. The method according to claim 1, **characterized in that** effects, which permit the supply voltage to drop during the measuring mode or during the life cycle of the position measuring device, are considered in the selection of the critical voltage Ug.

**Revendications**

1. Procédé pour la mise en service d'un dispositif de mesure de position, avec une unité de balayage (1), dans lequel, après la mise en marche du dispositif de mesure de position dans l'unité de balayage (1), une unité de surveillance de la tension (6) est tout d'abord alimentée en tension par une alimentation électrique (4), l'unité de surveillance de la tension (6) effectue alors un contrôle de l'alimentation électrique (4), et d'autres utilisateurs de l'unité de balayage (1) sont ensuite activés, dans la mesure où une alimentation électrique (4) suffisante à cet effet a été constatée lors du contrôle, **caractérisé en ce que** le contrôle de l'alimentation électrique (4) est effectué en calculant la résistance interne (Reff) de l'alimentation électrique (4) et en calculant, à partir de la résistance interne (Reff) de l'alimentation électrique (4) et du besoin électrique connu (Iges) de l'unité de balayage (1) pendant le mesurage, la valeur de la tension d'alimentation (Ueff) qui serait disponible après l'activation des autres utilisateurs de l'unité de balayage (1), l'unité de surveillance de la tension (6) fournissant un signalement d'erreur sur une interface (3a) de l'unité de balayage (1) si la valeur de la tension d'alimentation (Ueff) est inférieure à une tension limite (Ug) nécessaire au bon fonctionnement de l'unité de balayage (1).

2. Procédé selon la revendication 1, **caractérisé en ce que** lors du choix de la tension limite (Ug), des effets faisant chuter la tension d'alimentation pendant l'opération de mesurage ou pendant la durée de vie du dispositif de mesure de position sont pris en compte.

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4342377 A1
- DE 4422056 A1
- DE 4011411 A1
- JP 9091045 A